# EUROPEAN PATENT APPLICATION

(11) **EP 1 365 184 A1**
(43) Date of publication of application: **26.11.2003**
(21) Application number: 02011438.5
(22) Date of filing: 24.05.2002
(51) Int. Cl.: F16L 19/08

(54) **Connector device for pipes**

(71) Applicant: R.B.M. S.p.A., 25060 S. Giovanni di Polaveno (BS) (IT)
(72) Inventor: Bossini, Serafino, 25065 Lumezzane (BS) (IT)
(74) Representative: Dini, Roberto, Dr. Ing.

(57) **Abstract**

The invention refers to a connector device for pipes tightening units, comprising:
- sealing elements having mouthpiece devices (13) substantially in axial direction with guiding means (3),
- guiding means (3),
- gripping means (4),
assembled in their respective working position and guided substantially in axial direction by tightening means (5) for insertion in a mouthpiece (6) of the main body of a tap or fluid dispensing unit (26). The tightening means (5) comprise means for radial compression conjugated with said gripping means for tightening of a pipe (9) through the interference between at least a surface (10) of said gripping means and a portion of the outer surface (11) of the pipe (9) to be tightened.
The invention is featured by the sealing elements (2) of the connector device (1) forming a single body with the guiding means (3) and said gripping means (4) when assembling the connector device (1) in its operative tightening position (1).

## Description

The present invention refers to a connector device for pipes tightening units applicable to most common taps or general fluid dispensing units, both for household and industrial applications. The invention may be of considerable interest for all those applications, where versatility and skill for dismantling and assembling pipes and the like are required.

Pipes tightening units presently in use are provided to fit the pipe and enter a special mouthpiece of the apparatus body, downstream the dispensing apparatus. These units consist of a number of single elements, which are separated at the time of tightening and have to be arranged sequentially in their exact order, namely:
- an hydraulic sealing element,
- an elastic pipe tightening ring for gripping the pipe to be tightened,
- a ring nut placed between the former two, acting as a stop for both sealing elements.

All elements are conveniently assembled on the tap body by tightening of an appropriate bolt or other tightening means, which will engage an outer thread on the body of the dispensing apparatus. The bolt has an invitation cone truncated form, which strikes against an analogous surface of the pipe tightening ring. As a result, when the bolt is tightened after having arranged all three elements above in their exact order and inserted them in the mouthpiece of the body of the dispensing apparatus, the force exerted on the elastic ring tending to shrink its inner surface and bite the pipe to be tightened with a force proportional to the tightening force of the bolt itself.

During the assembly operation, this solution requires a certain attention by the operator in handling all three elements sequentially arranged.

As a first step, the mechanical sealing has to be forced into the mouthpiece of the dispenser body. Then the ring nut and the elastic ring must be appropriately placed inside the tightening bolt to start screwing the whole lot. Finally, the pipe is inserted inside the pipes tightening connector device downstream the dispenser body; thereafter, the unit can be tightened with force.

This operation has the drawback of being rather troublesome, i.e. a very exacting work for the fitter of the tightening unit, since it requires his absolute safe application for executing the various steps of this apparently easy assembly with calm and concentration.

It should be noticed, with reference to the above system technically known, how the force to be exerted for locking the pipe is generally a considerable one, depending on the material and manufacture of the elastic gripping ring.

Moreover, no torque wrenches are used at all for evaluating the strength exerted for this work, with the risk of operating too poor a tightening that will let the pipe to be drawn out or too high a tightening that will cause excessive radial distortion of the pipe to be tightened. As a result, either the pipe form or the through-flow section of the fluid to be dispensed may be plastically modified, i.e. actually changing a significant design parameter for correct operation of the whole fluid system.

It is the object of the present invention to remove the above drawbacks and provide a connector device for a pipes tightening unit, whose features are improved with respect to the technique presently known.

In this frame, it is the main object of the present invention to provide a tightening unit, which ensures a faster safer assembly, reducing and rationalizing both the operation time and procedures.

A further object is to reduce the fitter's operating effort and possible faults. The fitter can actually use a connector device, which can be appropriately pre-assembled and requires a much lower tightening effort compared to the effort required for common devices.

Another object is the possibility of recovering the connector device integrally, should it be wished to re-use it or use it again for another compatible fluid dispensing device.

In order to achieve these and other aims further described hereafter, it is the object of the present invention to provide a connector device for pipes tightening units incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows a lengthwise section of the connector device for pipes tightening units according to the present invention, in its assembled configuration;
- Fig. 2 shows a lengthwise section of a portion of the connector device for pipes tightening units according to the present invention;
- Fig. 3 shows a partial lengthwise section of an exploded view of the connector device for pipes tightening units according to the present invention.

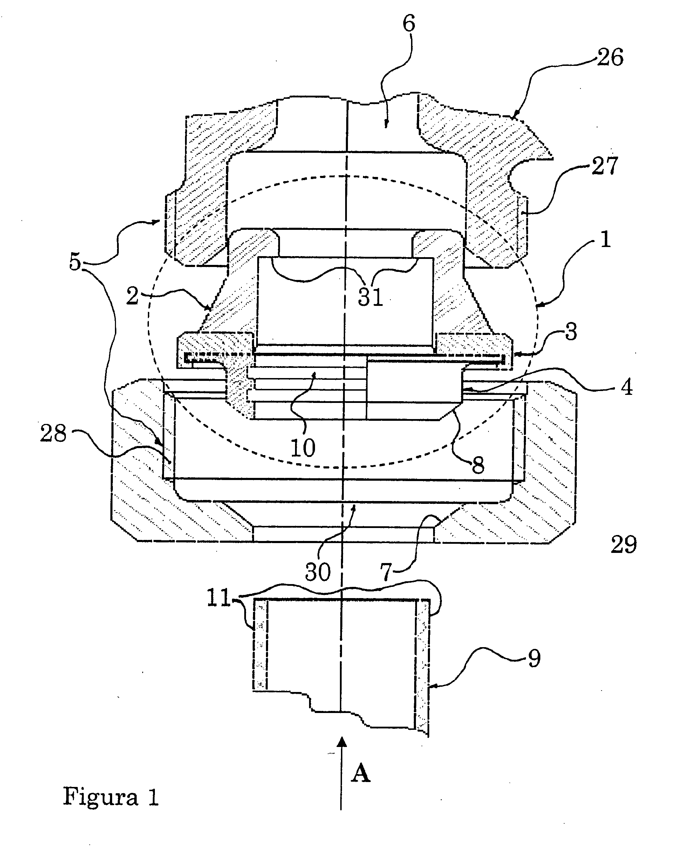

In Fig. 1 is clearly illustrating a connector device for pipes tightening units, indicated with 1 as a whole, partially entering a mouthpiece 6 of the main body 26 of a tap or fluid dispensing unit. On the above main body 26 an outer threading 27 is apt to engage a corresponding threading 28 of a bolt 29, according substantially to a vertical or axial direction indicated with the letter A.

The threading 27 and 28 as well as the bolt 29 are all pertaining to the tightening means 5, which in the operative position according to the present invention operate a tightening between the connector device 1 and the main body 26 of a tap or fluid dispensing unit.

Figure 1 also illustrates a cone truncated surface 7, obviously inclined compared to the axial direction A, being apt to exert a radial compression when appropriately interacting with the surfaces conjugated with it. This cone truncated surface 7 is obtained inside the bolt 29 in line with a hole 30 on the bolt head, which will stop a second cone truncated surface 8 when reaching its tightening position. This second cone truncated surface 8, conjugated to the cone truncated surface 7, is located outside a pipe tightening ring 4, which provides appropriate gripping means for adequate tightening of the pipes to be jointed.

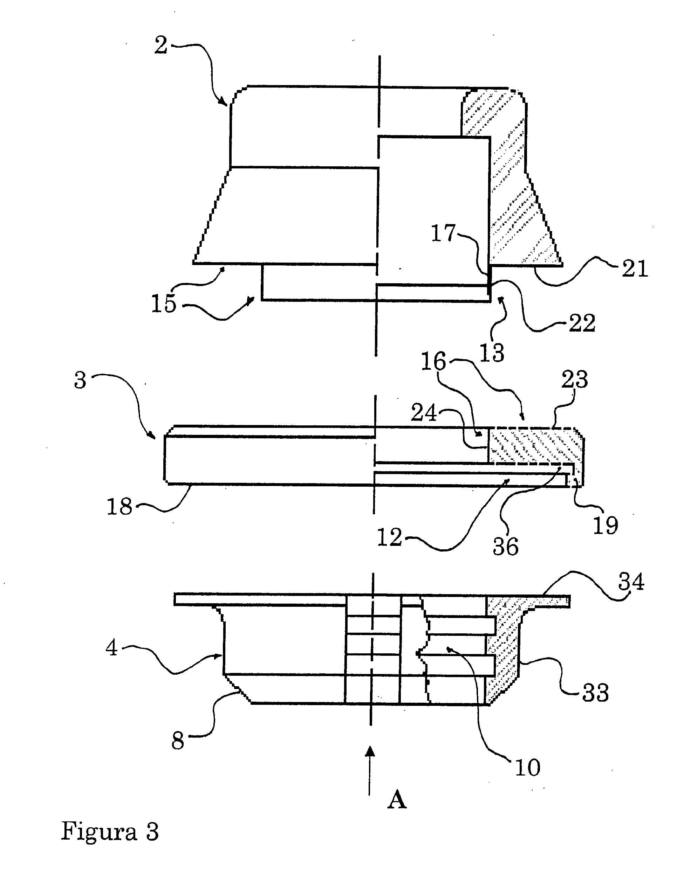

The above pipes tightening ring 4 has notches all over its circumference and grooves on its inner surface 10, as clearly illustrated in Fig. 3. This pipes tightening ring 4 has an outer surface 33 and an upper surface in the form of a circular crown 34. Moreover, its inner surface 10 is apt to engage an outer surface 11 of the pipe 9 to be tightened.

Fig. 1 further illustrates the pipe 9 to be tightened; in order to reach its assembled position, the pipe 9 enters the hole 30 on the bolt head 29 following the direction A until it is housed inside the connector device 1, i.e. striking the inner surface of an upper lip 31 of a shaped gasket 2 providing a sealing element, all pertaining to the connector device 1.

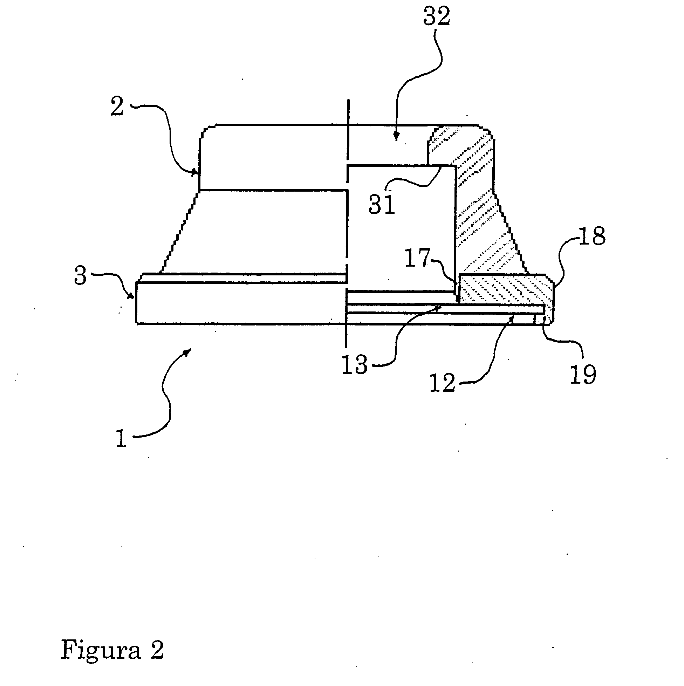

The shaped gasket 2 is clearly represented both in the exploded view of the connector device 1 in the partial lengthwise section of Fig. 3 and illustration of Fig. 2, where it is shown in its assembled position with a ring nut 18 pertaining to the guiding means 3 of the connector device 1 itself. As clearly shown in Fig. 1, the gasket 2 is featured by its own form matching the mouthpiece 6 of the main body 26 of a tap or fluids dispensing unit, which has a substantial cylindrical form and is named ogive by the technical people skilled in the art. In its assembled condition, the shaped gasket 2 is then apt to adhere with a portion of its outer surface to the inner surface of the mouthpiece 6 of the main body 26 of a tap or fluids dispensing unit.

The shaped gasket 2 has a through-path 32 in its upper section and mouthpiece devices 13 in its lower section, said upper and lower sections being intended with respect to its assembly direction. These mouthpiece devices 13 of the same gasket body 2 are clearly shown in Fig. 3, where it can be noticed that they comprise a portion substantially in the form of a lip 17 delimiting a first surface in the form of a circular crown 21 and a second cylindrical surface 22; these surfaces, collectively indicated as first surfaces 15, are external surfaces and conjugated to appropriate second surfaces 16 of the ring nut 18 pertaining to the guiding means 3.

Figures 2 and 3 are particularly highlighting the ring nut 18 with these second surfaces 16 above it, which consist of an outer circular ring surface 23 and an inner cylindrical surface 24, respectively. In its lower section, the ring nut 18 has an edge substantially in the form of a lengthwise L, pertaining to the housing means 12 along with a circular ring seat 36 delimited by the edge 19.

Also in these Figures it can be clearly noticed how the shaped gasket 2 has a sealing function between the first surfaces 15 and second surfaces 16 of the ring nut 18.

The second surfaces 16 of the ring nut 18 are eventually submitted to an appropriate sanding treatment ensuring a tougher coupling with the first surfaces 15 of the shaped gasket 2.

The connector device 1 for pipes tightening units according to the present invention is conveniently used or inserted in the main body 26 of a tap or fluids dispensing unit after its pre-assembly.

Pre-assembly of the connector device 1 provides the following steps:
- after a likely sanding treatment of the second surfaces 16 of the ring nut 18 as mentioned above, the shaped gasket 2 is submitted to a pressing operation substantially in axial direction for its coupling to the ring nut 18. In particular, after placing the relevant lip portion 17 of the shaped gasket 2 on the second surfaces 16 of the ring nut 18 and having fitted its inner cylindrical surface 24, the shaped gasket 2 is adequately pressed by means of a press or adequate machinery. Eventually, the first surface 15 of the shaped gasket 2 can be bonded with one or more surfaces 16 of the ring nut 18 interlaying adhesive means or bonding agents, or any other means being apt to strengthen the adhesion between the two components above;
- the pipes tightening ring 4 is submitted to radial closure by means of appropriate vice tools or the like applied to the outer surface 33 of the pipes tightening ring 4, thus reducing its radial extension and providing a housing for its upper portion in the form of a circular crown 34 inside the relevant circular ring seat 36 of the ring nut 18, the above housing being obtained through appropriate loosening of the tool vice and consequent radial expansion of the pipes tightening ring 4, which will engage the above seat 36, i.e. substantially avoiding a mutual axial movement of the pipes tightening ring 4 and ring nut 18, respectively.

The whole connector device 1 pre-assembled as above is forced substantially in axial direction A and with the help of appropriate tools inside the mouthpiece 6 of the main body 26 of a tap or fluids dispensing unit. Thereafter, the bolt 29 is tightened engaging its inner threading 28 with the external threading 27 of the main body 26. Since the second cone truncated surface 8 of the pipes tightening ring 4 strikes the cone truncated surface 7 of the bolt 29, this operation will first cause the connector device 1 to engage the shaped gasket 2 and perfectly adhere to the mouthpiece 6; thereafter, the pipe tightening ring 4 is tightened in a radial direction and will grip with its inner surface 10 the outer surface 11 of the pipe 9 to be tightened. The pipe 9 is previously and appropriately inserted following direction A in the head hole 30 of the bolt 29 and inside the connector device 1 until it strikes with its upper lip 31 against the shaped gasket 2 of the connector device 1 itself.

Therefore, it is clear that the higher the force for tightening the bolt, the higher the pipe tightening force will be.

From the above description the features of the present invention will be clear and also its advantages are clear.

The connector device for pipes tightening units described above ensures a considerably faster safer assembly of the tightening unit, reducing and rationalizing operation time and procedures.

The assembly operation consists of two steps, i.e. pre-assembly and final tightening, which are quickly executed by an operator, requiring no specific manual capability. This can be achieved because a considerably lower expertise is required by the operator compared to present techniques, and also because it reduces possible faults in view of the lower number of components to be assembled at the same time.

In conclusion, the troublesome work provided with the use of common techniques, which require considerable concentration and consequent loss of time, can be executed in a faster, linear, simple and cost effective way.

Advantageously, since for its mechanical sealing means the present invention uses a pipes tightening ring with notches all over its circumference, the tightening effort will be considerably lower compared to the means without notches presently in use.

Advantageously, the minor effort required with the use of the technique described above develops a higher sensitivity on the part of the operator in view of possible pipe distortions; it is commonly acknowledged by any man skilled in the art, in fact, that working with less physical effort ensures a higher control and consequently a higher sensitivity for the force to be applied. Practically, the operator can better "feel" the tightening action to be applied to the pipe while tightening the bolt and avoid plastic deformation to the pipe being tightened.

A further advantage of the present invention is featured by an easy integral recovery of the whole connector device pre-assembled according to the present invention when dismantling it, since it is manufactured as a single piece. Should the connector according to the present invention be spread in several pieces as suggested by common techniques, these pieces would be easily subject to damages and/or being lost. Therefore, the connector device according to the present invention is ready for re-use or easy application to another tap or fluids dispensing device, provided it can be appropriately matched.

Thus, the operation requires just one simple tool being apt to exert an axial force for disengaging or extracting the unit from the mouthpiece of the main body of a tap or fluids dispensing unit to be dismantled.

The connector device according to the present invention is capable of may changes and modifications for the man skilled in the art, without departing from the novelty principles of the innovative idea. Moreover, all the elements described above can be replaced by technical equivalent elements according to the inventive idea.

Accordingly, the components may differ in material, form and size for complying with specific requirements in use.

## Claims

1. A connector device for pipes tightening units, comprising:
- sealing elements having mouthpiece devices (13) substantially in axial direction, with guiding means (3),
- guiding means (3),
- gripping means (4),
assembled in their respective working position and guided substantially in axial direction (A) by tightening means (5) for insertion in a mouthpiece (6) of the main body of a tap or fluid dispensing unit (26), said tightening means (5) comprising means for radial compression conjugated with said gripping means for tightening a pipe (9) through the interference between at least a surface (10) of said gripping means and a portion of the outer surface (11) of the pipe (9) to be tightened,
said connector device (1) for pipes tightening units **characterized in that** said sealing means (2) form a single body with said guiding means (3) and said gripping means (4) when assembling the connector device (1) in its operative tightening position.

2. A connector device for pipes tightening units, according to claim 1, **characterized in that** said guiding means (3) comprise housing means (12), being apt to constrain said guiding means (3) to said gripping means substantially in axial direction (A).

3. A connector device for pipes tightening units, according to claim 1 and 2, **characterized in that** said means for radial compression comprise an inclined surface (7) with respect to the axial direction (A), having in particular a cone truncated form; said inclined surface (7) striking in its assembled position against a second surface (8) of said gripping means.

4. A connector device for pipes tightening units, according to the previous claim, wherein said second surface (8) of said gripping means (4) is conjugated to said inclined surface (7) of said means for radial compression.

5. A connector device for pipes tightening units, according to the previous claim, wherein said second surface (8) of said gripping means (4) comprises substantially a cone truncated surface.

6. A connector device for pipes tightening units, according to one or more of the previous claims, **characterized in that** said mouthpiece devices (13) of said sealing elements (2) comprise a portion substantially in the form of a lip (17), which interacts with at least a second surface (16) of said guiding means (3).

7. A connector device for pipes tightening units, according to one or more of the previous claims, **characterized in that** said guiding means (3) comprise a body substantially in the form of a ring nut (18).

8. A connector device for pipes tightening units, according to one or more of the previous claims, **characterized in that** said housing means (12) of said guiding means (3) comprise an edge with a section substantially in the form of an L (19) defining a circular ring seat (36).

9. A connector device for pipes tightening units, according to one or more of the previous claims, **characterized in that** said sealing means (2) comprise a shaped gasket matching the mouthpiece (6) of said main body (26) of a tap or fluids dispensing unit, being apt to adhere with a portion of its outer surface in its tightening operating position to the inner surface of the mouthpiece (6) of the main body (26) of a tap or fluids dispensing unit

10. A connector device for pipes tightening units, according to the previous claim, **characterized in that** the form of said shaped gasket (2) is such to comprise a first circular crown surface (21) for its coupling to a matching circular crown surface (23) of said guiding means (3), and a second cylindrical surface (22) for its coupling to one same surface (24) of said guiding means (3).

11. A connector device for pipes tightening units, according to the previous claim, **characterized in that** said surfaces of said guiding means (21, 22) and said sealing means (23, 24) are mutually coupled by compression substantially in an axial direction (A).

12. A connector device for pipes tightening units, according to one or more of the previous claims, **characterized in that** at least one of said second surfaces (16) of said ring nut (18) undergoes an appropriate sanding treatment ensuring a tougher coupling with a first surface (15) of said shaped gasket (2).

13. A connector device for pipes tightening units, according to the previous claim, **characterized in that** said coupling between said surfaces (15, 16) is obtained by a pressing operation substantially in axial direction (A) of the lip portion (17) of the shaped gasket (2) on the ring nut (18), said lip portion (17) having been previously laying against at least one of said second surfaces (16) of the ring nut (18) to fit its inner cylindrical surface (24).

14. A connector device for pipes tightening units, according to one or more of the previous claims, **characterized in that** said gripping means comprise a pipes tightening ring (4) with notches all over its circumference and with grooves on one of its inner surfaces (10), said inner surface (10) being apt in its tightening position to engage the outer surface (11) of the pipe (9) to be tightened.

15. A connector device for pipes tightening units, according to one or more of the previous claims, **characterized in that** said gripping elements (2) comprise adhering means between at least a first surface (15) of said sealing elements (2) and one or more surfaces of at least a second surface (16) of said guiding means (3).
